# EUROPEAN PATENT APPLICATION

(11) **EP 0 959 436 A1**
(43) Date of publication of application: **24.11.1999**
(21) Application number: 99201589.1
(22) Date of filing: 21.05.1999
(51) Int. Cl.: G07C 1/30, G07B 15/02, G07F 17/24

(54) **A parking system**

(30) Priority: 22.05.1998 NL 1009249
(71) Applicant: AND Identification B.V., 3001 GC Rotterdam (NL)
(72) Inventor: Tan, Stephan Franciscus, 3022 TH Rotterdam (NL); Veenman, Arjen, 2403 HX Alphen A/D Rijn (NL)
(74) Representative: Hooiveld, Arjen Jan Winfried

(57) **Abstract**

A parking system for the paid parking of cars, comprising means for writing a chip card up with parking credit units as well as a parking meter which is capable of writing parking credit units off from said chip card, which parking meter comprises a receiver which is capable of receiving data sent by a transmitter, and memory means for storing said data.

## Description

The invention relates to a parking system for the paid parking of cars.

Such a parking system is generally known. The known parking system comprises a parking meter, also called a "Piaf", and a card electronically loaded with parking money, which is to be inserted into said parking meter. When a driver parks his car, he inserts the card into the parking meter, whereby it must be indicated on the parking meter what tariff area applies: an area with a normal tariff or an area with an increased tariff. The driver must position the parking meter with the inserted card in the car in such a manner that it is clearly visible from outside, for example lying on the dashboard or suspended from the rearview mirror. When the parking session is ended, the driver removes the card from the parking meter, thus deactivating the parking meter. When there is no longer a balance present on the card, a new one must be purchased.

One objective of the known parking system is the fact that its applications are limited. Moreover, the card is often stolen from the car by vandals, with all the negative consequences for the car owner. The fact is that the electronically loaded card remains in the car while the car is parked.

The object of the invention is to provide a parking system for the paid parking of cars, wherein the drawbacks of the known parking system are overcome, and in order to accomplish that objective, the parking system of the kind referred to in the introduction is characterized in that it comprises means for writing a chip card up with parking credit units as well as a parking meter which is capable of writing parking credit units off from said chip card, which parking meter comprises a receiver which is capable of receiving data sent by a transmitter, and memory means for storing said data. This makes it possible in particular to have the transmitter send a code corresponding to a particular parking location to the parking meter receiver and to store said code in the memory means thereof. In another preferred embodiment, a tariff corresponding to a particular parking location is sent to the parking meter receiver by the transmitter and stored in the memory means thereof. The present parking system therefore provides a possibility to use a tariff which may vary for different parking locations and for different units of time. The term unit of time is thereby understood to mean not only an hour or parts thereof (six, fifteen or thirty-minute units etc.) or a multitude thereof (two hours, three hours, etc.), but also a specific date or dates or day(s) of the week. In yet another preferred embodiment messages, in particular traffic messages, are sent to the parking meter receiver by the transmitter, stored in the memory means thereof and displayed on a screen. The communication between transmitter and receiver is in particular one-way communication, preferably of the HSDS type, as will be explained in more detail in the description of the figures. In another preferred embodiment, two-way communication is used. With both variants it is possible in particular to make use of an automatic positioning system: GPS (Global Positioning System).

In yet another preferred embodiment of a parking system according to the invention, the chip card is present outside the car during the parking session. This protects the present parking system against loss or theft. The fact is that the parking meter will not contain any electronic money or parking credit units; said parking money remains present on the chip card before, during and after a parking session. Only when the chip card is in contact with a central system (indicated at D in the figures, and to be described in more detail yet with reference to said figures) can parking money be "written" to or from the card.

In another preferred embodiment of a parking system according to the invention, the parking meter can be activated by the chip card by inputting a code into the parking meter. This provides additional protection of the parking system against fraud.

In another preferred embodiment of a parking system according to the invention, the parking meter can be put out of action by remote control. In the event of loss or theft of the parking meter, the lawful owner can "blow up" the parking meter by remote control, as a result of which it becomes useless.

In another preferred embodiment of a parking system according to the invention, a parking log is kept and the most recent parking log is input into the parking meter. Further details thereof will be provided yet in the description of the figures.

The invention will now be explained in more detail with reference to figures illustrated in a drawing, wherein:
- Figure 1 shows a front view and a rear view of one preferred embodiment of a parking meter according to the invention;
- Figure 2 shows a preferred embodiment of a money/transaction flow in a parking system according to the invention; and
- Figure 3 schematically shows a preferred embodiment of an initiation/termination of a parking transaction in a parking system according to the invention.

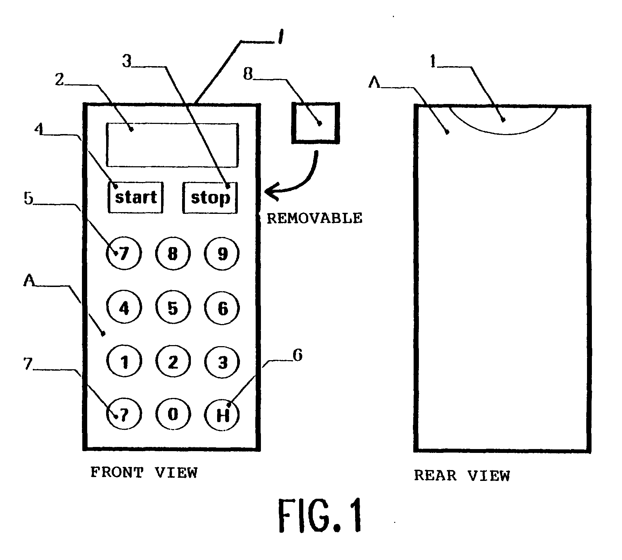

Figure 1 shows a preferred embodiment of a personal parking meter A, called "Park & Go" ™. The front side of the "Park & Go" parking meter A is provided at the top with a slot 1 for a chip card, an LCD screen 2, which is capable of displaying 2 x 12 characters, a stop button 3 for terminating a parking transaction, a start button 4 for initiating a parking transaction, a keypad 5 containing ten digits 0 - 9, a reset button 6 for correcting an error during a parking transaction, and an information button 7 for retrieving information, for example the parking balance and the like, on display 2.

The rear side of parking meter A of Figure 1 contains brief instructions for use of the parking system according to the invention. The loading of a chip card with parking credit units, in particular parking money, by a user takes place in a similar manner as the loading of an electronic wallet or purse with real money, think in this connection of the so-called "Chipper™" or Chipknip™". A chip card loaded with parking money is inserted into slot 1 of parking meter A, after which a x-digit number corresponding to a particular parking location (Delft, for example, is 2600) is input on keypad 5. Then start button 4 is pressed, after which the chip card can be removed from slot 1 so as to activate parking meter A. Deactivation of parking meter A takes place by pressing stop button 3 and reinserting the chip card into slot 1. As soon as LCD screen 2 displays a message that payment has been effected, the chip card can be removed from slot 1. Parking meter A is now deactivated.

According to the invention, the "Park & Go" parking meter A of Figure 1 is preferably fitted with a one-way data receiver module, in particular a so-called HSDS data receiver module, so that the parking meter A can be centrally and wirelessly updated as regards the input time, tariff and parking location data and other functional parameters. Parking meter A is to that end provided with a removable memory card 8, which is preferably secured by cryptographic means.

HSDS (High Speed FM Broadcasting Subcarrier Data System) of Seiko Communications is a worldwide system for wireless one-way communication. This HSDS communication system makes it possible to load parking meter A centrally, wirelessly and by remote control with the aforesaid numbers or codes corresponding to particular parking locations, with mutations relating to parking tariffs, with accurate data as regards date and time (synchronized with an atomic clock), as well as with user-specific security codes. This system furthermore makes it possible to transmit in particular traffic messages, for example to one parking meter, to several parking meters or to all parking meters that form part of the system.

The parking system according to the invention is compatible with every electronic "wallet" or paycard, with prepaid municipal (non-chargeable) parking cards and municipal licence parking cards. Furthermore, in the present case the parking credit units (parking money) are paid in advance and only the actual parking time used by a parker is paid for, whilst in addition a tariff which may vary for different parking locations and for different units of time is possible. Furthermore it will be apparent that the present parking system can be used in every town and city, whereby the parking meter is furthermore secured against theft, as will be explained yet hereafter.

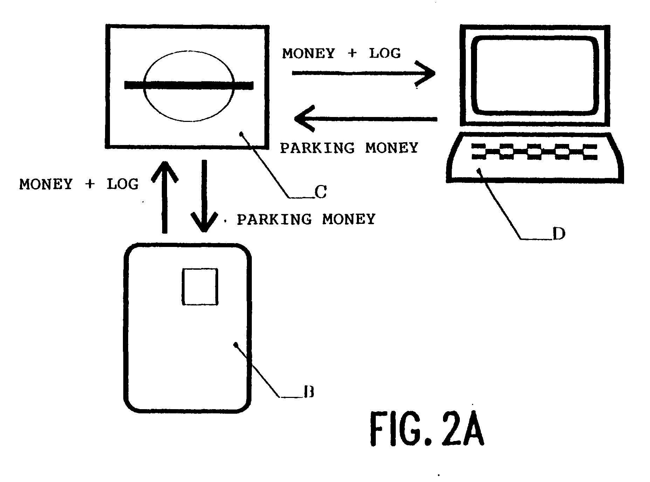

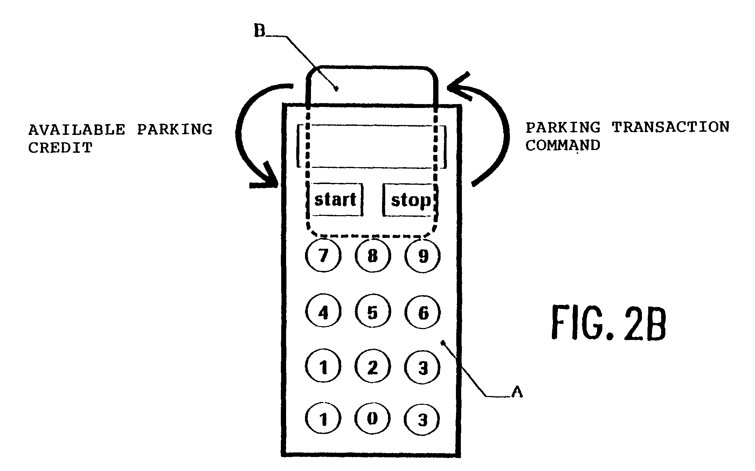

Figure 2 relates to a money/transaction flow in a parking system according to the invention. A chip card B is loaded with parking credit units, in a similar manner as electronic bank passes are loaded with real money. Chip card B is to that end inserted into an appropriate charging apparatus C, after which chip card B is loaded by inputting a desired amount of parking credit units (parking money). At the same time the corresponding amount of money which is due is written off from the respective bank account or directly from the electronic "wallet".

When chip card B is loaded anew, the "parking log" which is electronically recorded thereon is transmitted to a central "Park & Go" system D. This parking log contains in particular data about parking locations that have been used and the associated parking fees. Thus, the central "Park & Go" system is enabled to transfer parking fees in particular to associated municipalities (or, generally, car-park operators). In addition, the amount of parking credit units to be loaded is transmitted to the "Park & Go" system, with which amount chip card B is subsequently written up by this system.

Figure 2B shows that when chip card B is inserted into slot 1 of parking meter A, a parking balance present on chip card B can be read from LCD display 2, or a parking amount which is due can be visualized on LCD display 2, and - once this amount has been found correct - payment can take place by means of the inserted chip card B.

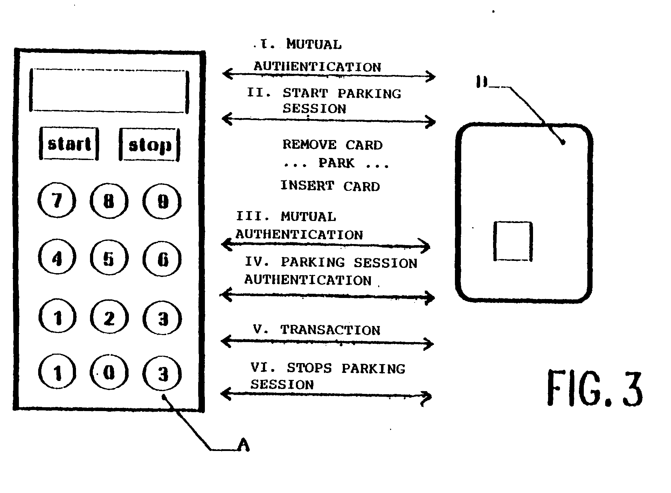

Figure 3 serves to illustrate, respectively, an initiation and a termination of a parking transaction in a parking system according to the invention. A chip card B provided with a card number, a status and a parking log containing data regarding parking credit units still present on chip card B, used-up parking credit units and parking locations that have been used, is inserted into slot 1 of parking meter A. Parking meter A "reads" the card number as well as a parking balance that is still present on chip card B. Chip card B and parking meter A are capable of authenticating each other (- verifying each other's authenticity). When parking meter A and card B recognize each other's authenticity, a parking session can be started. During the session, the parking function of chip card B is in a "wait state", whilst parking meter A is active (in other words, a chip card B is capable of realising only one parking session at a time). Card B and meter A can be physically separated during a session. When the parking session is being ended (termination), chip card B is inserted again and card B and meter A verify each other's authenticity again, as well as the authenticity of the previously initiated parking session. When everything is found to be correct, parking meter A calculates the parking amount that is due and writes this amount off from the parking credit of chip card B and updates the log. Then parking meter A deactivates itself and chip card B is released again for a new parking session. At that moment both parking meter A and chip card B are ready for use again.

The parking meter is secured against loss or theft in that it can be put out of action, that is, "blown up" by remote control by the "Park & Go" system manager.

Loss or theft of chip card B does not mean loss of the remaining parking credit units that are present thereon. After all, the current parking log can be recovered by means of the removable memory card in parking meter A, after which the balance of parking credit units can be paid back to the lawful owner. Chip card B is disabled by the central "Park & Go" system. Furthermore it is possible to transmit black lists of invalid cards to all parking meters being in use via the data communication system.

The advantages of the present "Park & Go" parking system are legion: safe ease of parking, inexpensive apparatus (parking meter plus chip card), nationwide usability, central settlement (full service), closed financial system (!) and ideal for the business users and private users.

The present parking system is also suitable for the use of chip cards containing a once-only, fixed amount of parking credit units ("prepaid smart cards"), as well as for the use of parking licence chip cards ("licence smart cards"). The chip cards containing a once-only, fixed amount of parking credit units (parking money) cannot be reloaded. These chip cards are inserted into the parking meter, whereby the parking meter can debit the cards with the parking fees that are due. These cards can be used at locations of one car-park operator. "Licence smart cards" correspond with the "prepaid smart cards", with this understanding that although the former can also be used at (all) locations in for example one municipality, they cannot be used for direct settlement of parking fees that are due. As a matter of fact, both types of chip cards will remain in the car during the parking session. Inspection by a car-park attendant is relatively simple. The car-park attendant carries an identical parking meter containing a "licence smart card" of the location to be inspected. All parking meters receive a random number via their receivers. This number changes periodically, more in particular a few times a day at random moments. The car-park attendants compute a new three to six-digit number based on the received random number, the location code, the local tariff, and, in particular, a secret key. This three to six-digit number is displayed on the LCD screen. The number on the respective car parking meter must be the same as the number on the car-park attendant's parking meter.

From the foregoing it will be apparent that the log kept on chip card B must at all times tally with the number of purchased parking credit units present on chip card B and the number of parking credit units written off therefrom. This makes the log (which contains data relating to parking credit units still present on chip card B, to parking credit units that have been written off in the meantime and to parking locations that have been used) essentially fraud-proof.

## Claims

1. A parking system for the paid parking of cars, comprising means for writing a chip card up with parking credit units as well as a parking meter which is capable of writing parking credit units off from said chip card, which parking meter comprises a receiver which is capable of receiving data sent by a transmitter, and memory means for storing said data.

2. A parking system according to claim 1, wherein the communication between transmitter and receiver is one-way communication.

3. A parking system according to claim 2, wherein the said one-way communication is of the HSDS type.

4. A parking system according to claim 1, 2 or 3, wherein the chip card is present outside the car during the parking session.

5. A parking system according to any one of the preceding claims 1 - 4, wherein the parking meter can be activated by the chip card by inputting a code into the parking meter.

6. A parking system according to any one of the preceding claims 1 - 5, wherein the parking meter can be put out of action by remote control.

7. A parking system according to any one of the preceding claims 1 - 6, wherein a code corresponding to a particular parking location can be sent to the parking meter receiver by the transmitter and be stored in the memory means thereof.

8. A parking system according to any one of the preceding claims 1 - 7, wherein a tariff corresponding to a particular parking location can be sent to the parking meter receiver by the transmitter and be stored in the memory means thereof.

9. A parking system according to any one of the preceding claims 1 - 8, wherein messages, in particular traffic messages, can be sent to the parking meter receiver by the transmitter, and be stored in the memory means thereof.

10. A parking system according to any one of the preceding claims 1 - 9, wherein a parking log is kept on the chip card and the most recent parking log is input into the parking meter.
